# EUROPEAN PATENT APPLICATION

(11) **EP 4 836 459 A1**
(43) Date of publication of application: **04.11.2026**
(21) Application number: 26169132.3
(22) Date of filing: 30.03.2026
(51) Int. Cl.: H04W 4/14, H04L 9/06

(54) **SYSTEMS AND METHODS FOR ENCRYPTED SHORT MESSAGE TRANSMISSION**

(30) Priority: 29.04.2025 US 202519192890
(71) Applicant: L3Harris Global Communications, Inc., Melbourne, FL 32919 (US)
(72) Inventor: FURMAN, William M., Melbourne, 32919 (US); KURDZIEL, Michael T., Melbourne, 32919 (US)
(74) Representative: Schmidt, Steffen J.

(57) **Abstract**

Systems and methods for generating and/or communicating an encrypted short message. The methods comprise: setting, by a circuit, an initialization vector for an encryption algorithm to a time of day or to a value computed based on a transmission security algorithm and the time of day; initializing, by the circuit, the encryption algorithm to run in a cipher mode; and generating, by the circuit, the encrypted short message by encrypting a short message using the initialization vector as an input to the encryption algorithm. Crypto synchronization is provided without communication of the initialization vector to a decryption algorithm.

## Description

### BACKGROUND

### Description of the Related Art

Resilient low data rate messaging waveforms have been designed to carry short message service (SMS) messages. Currently, these waveforms are protected by a software transmission security algorithm where every transmitted symbol is scrambled by the transmission security algorithm. The waveform is undetectable and un-readable without knowledge of the transmission security key. The message bits are not encrypted in any fashion, relying on the transmission security algorithm for protection.

### SUMMARY

This document concerns implementing systems and methods for generating an encrypted short message, comprising: setting, by a circuit, an initialization vector for an encryption algorithm to a time of day or to a value computed based on a transmission security algorithm and the time of day; initializing, by the circuit, the encryption algorithm to run in a cipher mode; and generating, by the circuit, the encrypted short message by encrypting a short message using the initialization vector as an input to the encryption algorithm. Crypto synchronization is provided without communication of the initialization vector to a decryption algorithm.

This document also concerns a communication system comprising an encrypter configured to: set an initialization vector for a cryptographic algorithm to a time of day used as an input to a transmission security algorithm or to a value computed based on the transmission security algorithm and the time of day; initialize the cryptographic algorithm to run in a cipher mode; and encrypt a short message using the initialization vector as an input to the cryptographic algorithm. Crypto synchronization is provided without communication of the initialization vector to a decryption algorithm.

This document further concerns a cryptographic system comprising: one or more processors; and a non-transitory computer readable medium comprising one or more programming instructions that when executed by the one or more processors, cause the one or more processors to: set an initialization vector for an encryption algorithm to a time of day or to a value computed based on a transmission security algorithm and the time of day; initialize the encryption algorithm to run in a cipher mode; and generate an encrypted short message by encrypting a short message using the initialization vector and/or a secrete key as inputs to the encryption algorithm. Crypto synchronization is provided without communication of the initialization vector to a decryption algorithm.

### BRIEF DESCRIPTION OF THE DRAWINGS

This disclosure is facilitated by reference to the following drawing figures, in which like numerals represent like items throughout the figures.
FIG. 1 provides an illustration of a cryptographic system.
FIG. 2 provides a block diagram of a communication system.
FIG. 3 provides a flow diagram of an illustrative method for transmitting a message or other data in accordance with the present solution.
FIG. 4 provides a flow diagram of an illustrative method for receiving and decrypting a message in accordance with the present solution.
FIGS. 5A-5B (collectively referred to as "FIG. 5") provides a flow diagram of an illustrative method for generating and/or communicating encrypted short message(s).
FIG. 6 provides an illustration of an architecture for a computing device.

### DETAILED DESCRIPTION

It will be readily understood that the solution described herein and illustrated in the appended figures could be implemented in a variety of different configurations. Thus, the following more detailed description, as represented in the figures, is not intended to limit the scope of the present disclosure but is merely representative of certain implementations in different scenarios. While the various aspects are presented in the drawings, the drawings are not necessarily drawn to scale unless specifically indicated.

Reference throughout this specification to features, advantages, or similar language does not imply that all the features and advantages that may be realized should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

In some scenarios, it may be desirable to encrypt an SMS or binary message. The problem is that most encryption techniques require the transmission of initialization data (e.g., a Message Indicator) for crypto synchronization. This initialization data can easily be many times longer than the actual message being transmitted resulting in a longer transmission time, increased probably of detection, reduction of battery life, etc. The current state of the art is to append the initialization data (e.g., Message Indicator) to the transmitted message extending the number of bits sent and transmission time.

The present solution addresses these drawbacks of conventional encryption techniques by employing Counter (CTR) mode. CTR mode is a standard cryptographic mode that can be applied to variable or short length data in a way that does not require padding of a short message up to a fixed number of blocks and does not cause data expansion. Specifically, CTR mode involves adding a block of data every time a block of the message is encrypted. The extra block is called a counter block. A different counter block is used for every message block. This makes CTR mode an ideal mode for securing SMS and/or binary messages carried by resilient low data rate messaging waveforms. The National Institute of Standards and Technology (NIST) approved modes of operation include CTR mode in SP800-38A as a standard mode of operation for cryptographic block ciphers. CTR mode is applicable to Type-1 (PRC-160), Type 3 and Type 4 (RF-7800H) applications.

The basic CTR mode for encryption and decryption can be described by the following mathematical equations (1)-(3).${Y}_{i} = F \left(IV + g\left(i\right), Key\right)$(1)$CT = PT \times OR {Y}_{i }$(2) $PT = CT XOR {Y}_{i}$ (3) where **Yᵢ** represents the keystream produced by the cipher, **F**(**x**) represents the cipher operation, **g(i)** represents the i^{th} counter increment, **IV** represents an initialization vector for the cipher operation, **Key** represents the cryptographic shared secret, **PT** represents plaintext, and **CT** represents ciphertext.

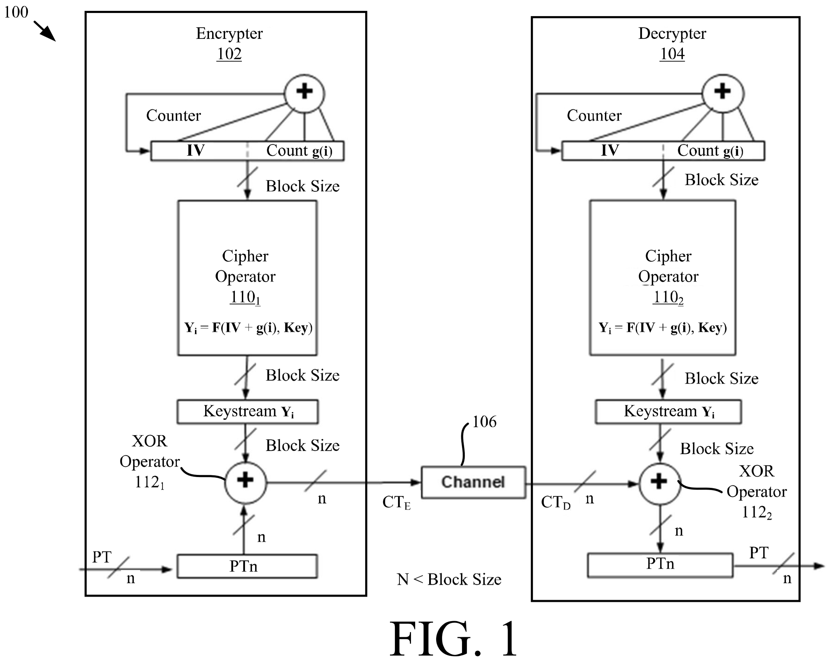

FIG. 1 provides an illustration showing a system **100** implementing the CTR mode in accordance with above mathematical equations (1)-(3). System **100** comprises an encrypter **102** and a decrypter **104.** Encrypter **102** implements mathematical equations (1) and (2). As such, encrypter **102** comprises a cipher operator **110₁** configured to receive an initialization vector **IV** for a cipher operation and a count **g**(**i**). This received information is used by the cipher operator **110₁** to compute keystream **Yᵢ.** Keystream **Yᵢ** is passed to an XOR operator **112₁**. XOR operator **112₁** combines the keystream **Yᵢ** with n bits of plain text **PT** to produce ciphertext **CT_{E}.** Ciphertext **CT_{E}** is modulated onto a waveform that is sent over a communication channel **106** to decrypter **104.**

Decrypter **104** implements mathematical equations (1) and (3). As such, decrypter 104 comprises a cipher operator **110₂** configured to receive an initialization vector **IV** for a cipher operation and a count **g**(**i**). This received information is used by the cipher operator **110₂** to compute keystream **Yᵢ**. Keystream **Yᵢ** is passed to an XOR operator **112₂**. XOR operator **112₂** combines the keystream **Yᵢ** with received ciphertext **CT_{D}** to produce plaintext **PT.** Plaintext **PT** may then be output from decrypter **104.**

The present solution is not limited to CTR mode implementations. The present solution can be used with stream and block cipher modes without error propagation properties. For example, Authentication Encryption (AE) modes may also be applied for securing SMS and/or binary messages carried by resilient low data rate messaging waveforms. The AE modes can include, but are not limited to, Galois Counter Mode (GCM) and specialized GCM (GMAC) mode.

The waveform sent over communication channel **106** may be protected by a software transmission security algorithm. Transmission security may be referred to herein as TRANSEC. One reason the transmission security algorithm is employed is to prevent a record and playback spoofing scenario in which communication resources are tied up. Since the waveform may use the time of day (TOD) TRANSEC to scramble symbols, the waveform cannot be detected unless someone has the transmission security **Key** and accurate TOD. System **100** may have a TRANSEC validity interval of sixty seconds. System **100** may be designed to work without global positioning system (GPS) when the radio TOD clock can be set via wristwatch time (+/-15 seconds). Therefore, the TOD can also be used as the initialization vector **IV** for the cipher operation in CTR mode. This means that a separate initialization vector **IV** will not need to be generated and will not need to be sent over-the-air from a transmitter to a receiver. This solution allows a message to be secure without adding any additional on-air overhead.

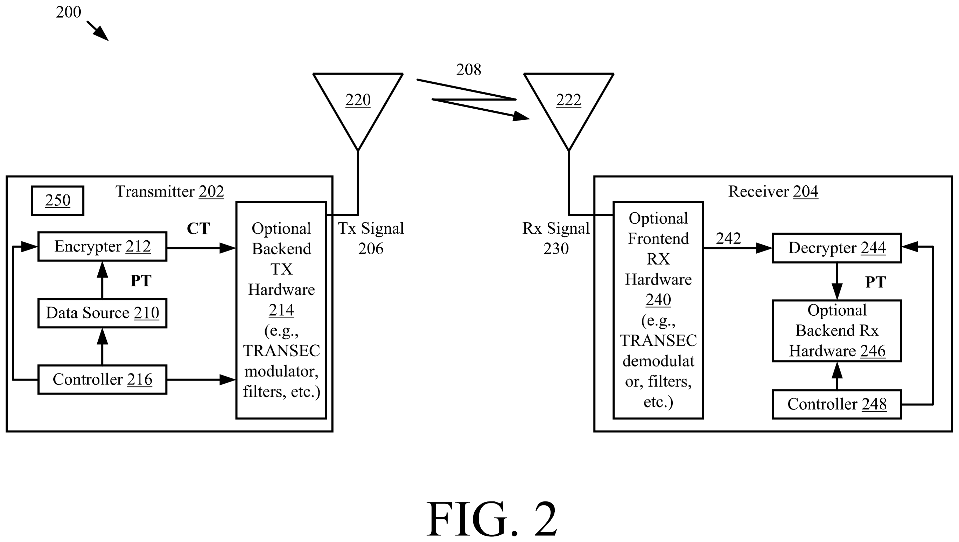

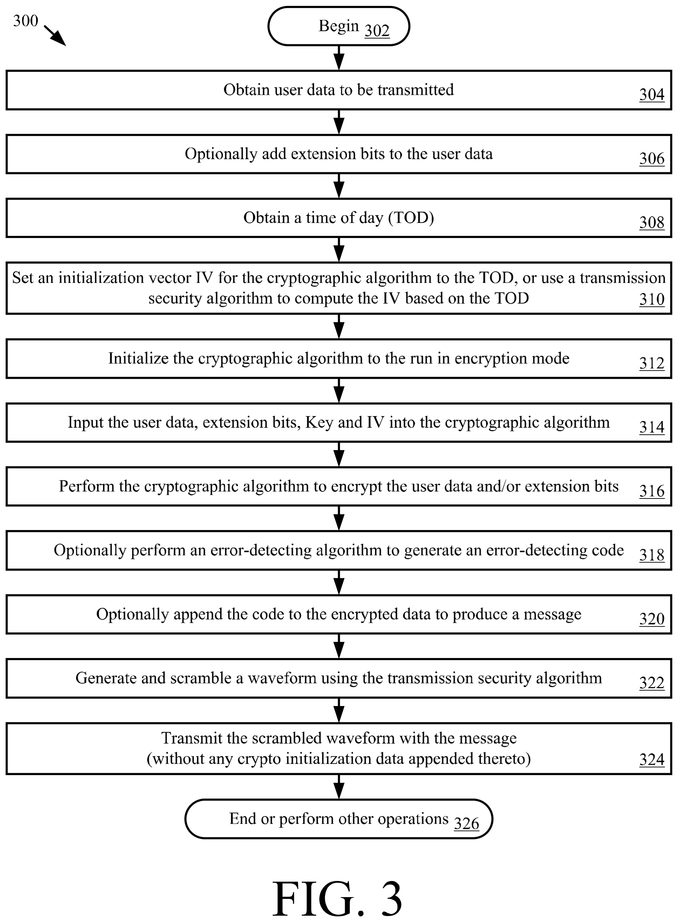

FIG. 2 provides an illustration of a communication system **200** implementing the present solution. Communication system **200** implements the concepts discussed above in relation to FIG. 1 and/or the methods discussed below in relation to FIGS. 3-4. In this regard, communication system **200** is generally configured to communicate a Tx signal **206** from a transmitter **202** to a receiver **204.**

Transmitter **202** comprises a circuit configured to generate encrypted messages, modulate the encrypted messages on a signal, and use a transmission security algorithm to protect the waveform during transmission. Any known or to be known transmission security algorithm can be used here. As such, transmitter **202** comprises a data source **210,** an encrypter **212,** optional backend transmit hardware **214,** and a controller **216** for controlling time synchronization and/or operations of components **210-214.** Components **210-216** may be implemented in hardware and/or software of transmitter **202.** During operation, data source **210** supplies plaintext **PT** to encrypter **212.** Plaintext **PT** may include, but is not limited to, SMS message(s), and/or binary message(s). Encrypter **212** may be the same as or similar to encrypter **102** of FIG. 1. Thus, encrypter **212** is configured to convert or transform plaintext **PT** into ciphertext **CT** in accordance with CTR mode and/or other AE mode. Ciphertext **CT is** passed to backend transmit hardware **214.** Backend transmit hardware **214** processes and modulates the ciphertext **CT** onto a carrier signal to generate Tx signal **206.** The processing may include, but is not limited to, digital-to-analog conversion, filtration, radio frequency (RF) up conversion, and/or modulation. The modulation may include, but is not limited to, transmission security modulation. Tx signal **206** is transmitted over a communication channel **208** via antenna **220.**

The transmitted waveform is received at an antenna **222** of the receiver **204.** Receiver **204** comprises a circuit configured to receive and process a received waveform. The received signal **230** is passed to frontend receive hardware **240.** Frontend receive hardware **240** performs pre-processing on the received signal **230** obtained through antenna **222.** The pre-processing may include, but is not limited to, filtration, amplification, RF-to-IF conversion, analog-to-digital conversion, IF translation, transmission security demodulation, and/or symbol timing recovery. As such, frontend receive hardware **240** can include, but is not limited to, amplifier(s), filter(s), RF-to-IF converter, analog-to-digital converter (ADC), multipliers, local oscillators, IF translator, complex multipliers, and/or symbol timing recovery component(s). Rx signal **230** may contain noise, interfering signals and/or other channel distortions inherent in the propagation through the wireless communication channel **208.** The output of the frontend receive hardware **240** is referred to herein as a pre-processed received signal **242.** The pre-processed received signal **242** is communicated from the frontend receive hardware **240** to the decrypter **244.** Decrypter **244** may be the same as or similar to decrypter **104** of FIG. 1. Thus, decrypter **244** is configured to convert or transform ciphertext **CT** into plaintext **PT** in accordance with CTR mode and/or other AE mode. Plaintext **PT** is passed to backend receive hardware **246.** The backend receive hardware **246** can include, but is not limited to, hard decision circuits, symbol-to-bits conversion circuits, source decoders, and/or interfaces to communicate the received message or other data to an external device (not shown).

Receiver **204** may also comprise a controller **248.** Controller **248** is configured to control time synchronization and/or operations of components **240-246.**

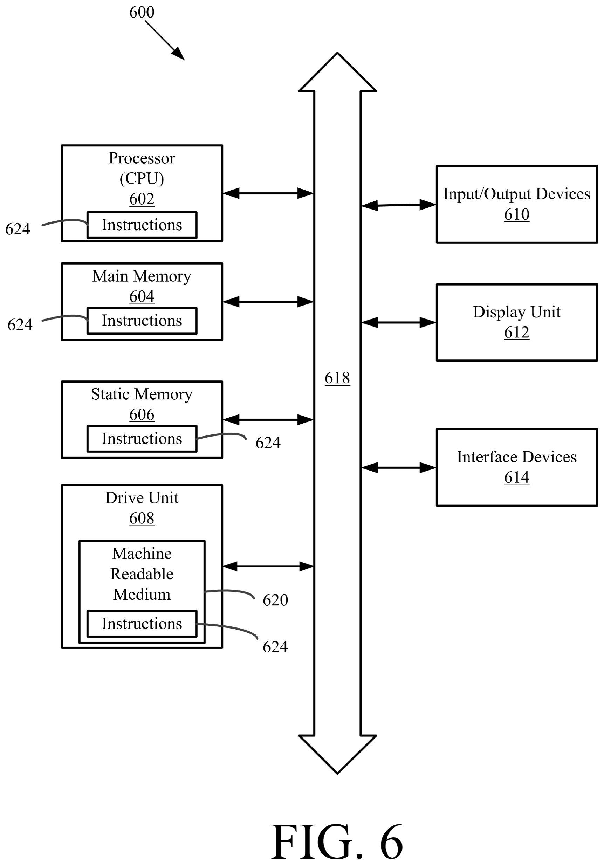

FIG. 3 provides a flow diagram of an illustrative method **300** for transmitting a message or other data in accordance with the present solution. Method **300** may be performed by a circuit, a transmitter (e.g., transmitter **202** of FIG. 2), a processor, and/or computer system (e.g., computer system **600** of FIG. 6). The circuit can include, but is not limited to, a general-purpose processor, a field programmable gate array (FPGA), an application specific integrated circuit (ASIC), or any other circuit. The circuit may also comprise any of the other listed devices, i.e., the transmitter, processor and/or computer system. The processor can include, but is not limited to, processor **602** of FIG. 6 and/or a general-purpose processor. The operations of method **300** will be discussed in relation to the processor for ease of discussion.

Method **300** begins at block **302** and continues to block **304** where user data is obtained by the processor from a data source (e.g., data source **210** of FIG. 2). The user data can include, but is not limited to, a text message and/or a sequence of binary data. The user data is in a plaintext format. Thus, the user data may be referred to as plaintext **PT.**

In block **306,** the processor may optionally add extension data bits to the user data. For example, the message may be 10, 20, 40, 60, 80, 100, 120, 140 or 160 characters long. As such, if a text message includes the word "HELLO", then extension bits may be added to the text message to provide a 10-character message "HELLO_ _ _ _ _". The present solution is not limited to the particulars of this example.

Next in block **308,** the processor obtains a time of day (TOD). The TOD may be obtained, for example, from a radio TOD clock (e.g., TOD clock **250** of FIG. 2) and/or from a transmission security algorithm. The TOD obtained here is the same TOD used by the transmission security algorithm. The radio TOD clock may be set via wristwatch time (e.g., +/N seconds). The TOD is used by the processor in block **310** to either (i) set an initialization vector **IV** for a cryptographic algorithm to the TOD or (ii) use a transmission security algorithm to compute the **IV** based on the TOD. Any known or to be known transmission security algorithm can be used here. In option (ii), the IV may include any number derived from the TOD based on the transmission security algorithm. For example, the transmission security algorithm may use the TOD to generate numbers (e.g., time offsets and frequency differences) for time synchronization. Any of these numbers can be used as the IV.

In block **312,** a cryptographic algorithm is initialized to run in an encryption mode. The encryption mode can include, but is not limited to, a CTR mode or an AE mode. The AE mode can include, but is not limited to, GCM and/or GMAC mode. The user data, extension bits, **IV** and encryption **Key** are input into the cryptographic algorithm, as shown by block **314.** The cryptographic algorithm is performed in block **316** to encrypt the user data and/or extension bits. An error-detecting algorithm is performed in block **318** to generate an error-detecting code. The error-detecting algorithm can include, but is not limited to, a cyclic redundance check (CRC) algorithm. The error-detecting code can include, but is not limited to, a checksum. The error-detecting code is appended to the encrypted data in block **320** to produce a message. The transmission security algorithm is used in block **322** to generate and scramble a waveform including the message. The scrambled waveform is transmitted in block **324** without any crypto initialization data appended thereto. In this regard, it should be emphasized that the IV is not transmitted.

Subsequently, method **300** continues to block **326** where its ends or other operations are performed. The other operations can include, but are not limited to, returning to block **302.**

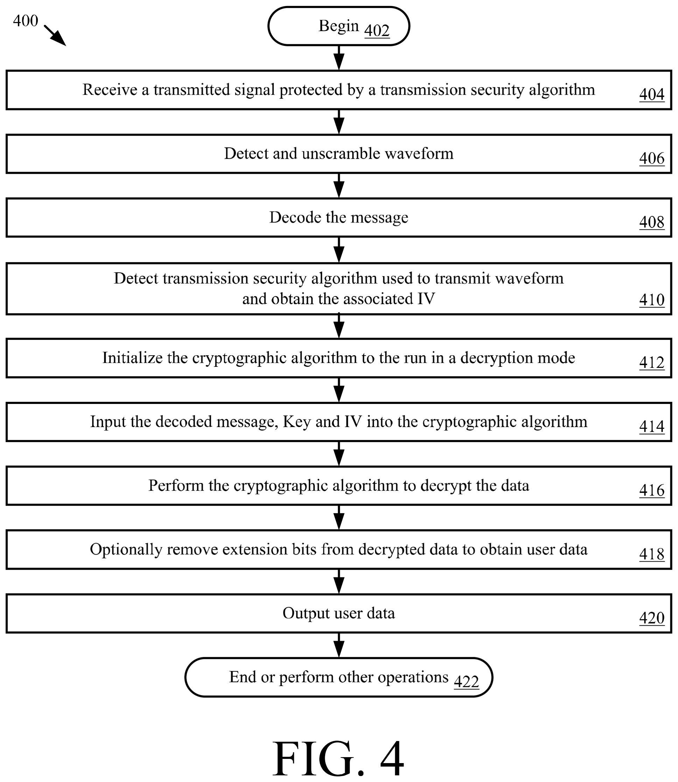

FIG. 4 provides a flow diagram of a method **400** for receiving and processing a message in accordance with the present solution. Method **400** may be performed by receiver (e.g., transmitter **204** of FIG. 2), a processor (e.g., processor **602** of FIG. 6), and/or computer system (e.g., computer system **600** of FIG. 6). The operations of method **400** will be discussed in relation to the processor for ease of discussion.

Method **400** begins at block **402** and continues to block **404** where a transmitted signal is received. The transmitted signal is protected by a transmission security algorithm. Transmission security algorithms are well known. In block **406,** a processor detects and unscrambles the waveform. Any known or to be known techniques for detecting and unscrambling waveforms can be used here. Next in block **408,** the message contained in the waveform is decoded. This may involve performing known or to be known demodulation, time synchronization, and/or CRC error correction operations.

In block **410,** the processor detects the transmission security algorithm used to transmit the waveform and obtains the associated initialization vector IV. The associated initialization vector **IV** can include the TOD used by the transmission security algorithm or a value computed based on the transmission security algorithm and on the TOD. The operations performed in block **410** can be the same as similar to those performed in block **310** of FIG. 3.

The processor initializes a cryptographic algorithm in block **412** to run in a decryption mode. The decryption mode can include, but is not limited to, a CTR mode or an AE mode. The AE mode can include, but is not limited to, GCM and/or GMAC mode. The decoded message, **Key** and **IV** are input into the cryptographic algorithm, as shown by block **414.** The processor performs the cryptographic algorithm in block **416** to decrypt the data.

In some scenarios, method **400** comprises optional block **418** in which extension bits are removed from the decrypted data to obtain the user data. The user data is output in block **420.** Any known or to be known technique to output user data can be used here. The user data can include, but is not limited to, a text message or a binary message.

Subsequently, method **400** continues to block **422** where its ends or other operations are performed. The other operations can include, but are not limited to, returning to block **402.**

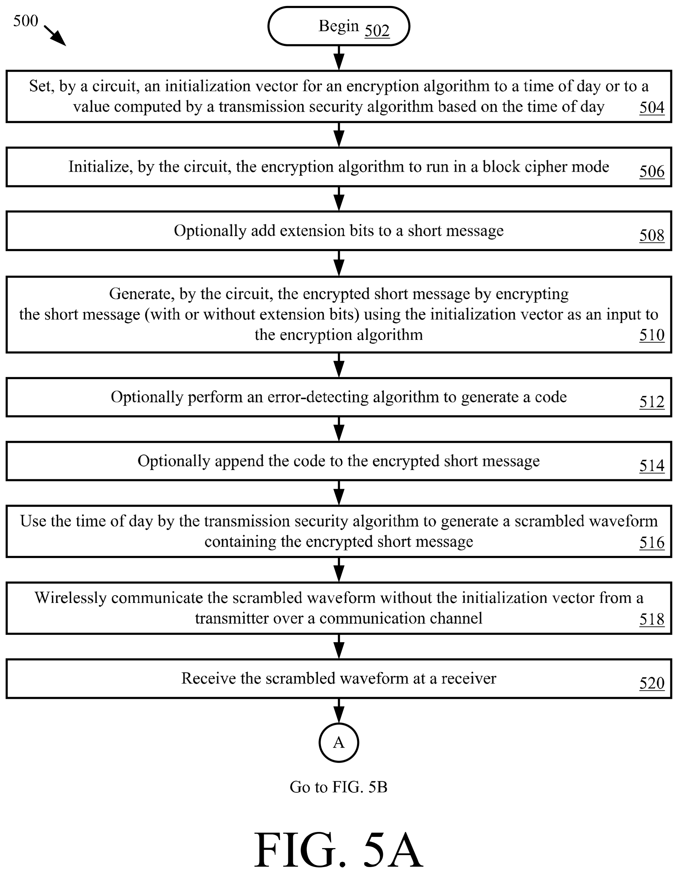

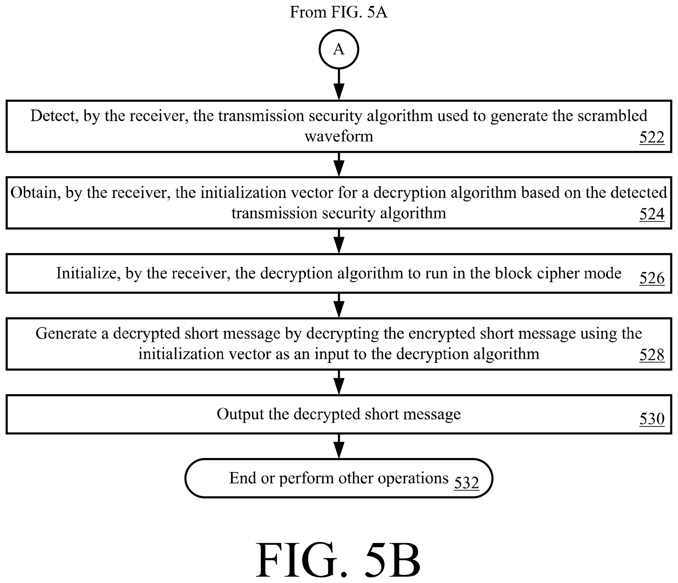

FIG. 5 provides a flow diagram of an illustrative method **500** for generating and/or communicating an encrypted short message. Method **500** may include more or less operations than that shown.

Method **500** begins at block **502** and continues to block **504** where a circuit (e.g., circuit **100** of FIG. 1, circuit **202** of FIG. 2, circuit **204** of FIG. 2, and/or circuit **600** of FIG. 6) sets an initialization vector for an encryption algorithm to a time of day or to a value computed by a transmission security algorithm based on the time of day. Any known or to be known transmission security algorithm can be used here. The circuit initializes the encryption algorithm in block **506** to run in a stream or block cipher mode. The block cipher mode can include, but is not limited to, a counter mode or an authentication encryption mode. In optional block **508,** the circuit may add extension bits to a short message. The short message can include, but is not limited to, a text message or a binary message. The circuit generates the encrypted short message in block **510** by encrypting a short message (with or without the extension bits) using the initialization vector as an input to the encryption algorithm. It should be noted that crypto synchronization is provided without communication of the initialization vector to a decryption algorithm.

In optional blocks **512-514,** the circuit may perform an error-detecting algorithm (e.g., a cyclic redundance check algorithm) to generate an error-detecting code (e.g., a checksum) and appends the error-detecting code to the encrypted short message.

In block **516**, the time of day is used by the transmission security algorithm to generate a scrambled waveform containing the encrypted short message. The scrambled waveform is wirelessly communicated without the initialization vector from a transmitter over a communication channel, as shown by block **518.**

The scrambled waveform is received at a receiver in block **520.** Method **500** then continues to block **522** of FIG. 5B. Block **522** involves detecting, by the receiver, the transmission security algorithm used to generate the scrambled waveform. The receiver obtains the initialization vector for a decryption algorithm in block **524** based on the detected transmission security algorithm. The decryption algorithm is initialized in block **526** to run in a stream or block cipher mode. A decrypted short message is generated in block **528** by decrypting the encrypted short message using the initialization vector as an input to the decryption algorithm. The decrypted short message may be output in block **530.** Subsequently, method **500** continues to block **532** where it sends or other operations are performed. The other operations can include, but are not limited to, returning to block **502.**

Referring now to FIG. 6, there is shown a hardware block diagram comprising an example computer system **600** that can be used for implementing all or part of the encrypter **102** of FIG. 1, the decrypter **104** of FIG. 1, the transmitter **202** of FIG. 2, and/or receiver **204** of FIG. 2. The machine can include a set of instructions which are used to cause the circuit or computer system to perform any one or more of the methodologies discussed herein. While only a single machine is illustrated in FIG. 6, it should be understood that in other scenarios the system can be taken to involve any collection of machines that individually or jointly execute one or more sets of instructions as described herein.

The computer system **600** is comprised of a circuit including a processor **602** (e.g., a central processing unit (CPU)), a main memory **604,** a static memory **606,** a drive unit **608** for mass data storage and comprised of machine readable media **620,** input/output devices **610,** a display unit **612** (e.g., a liquid crystal display (LCD) or a solid state display, and/or one or more interface devices **614.** Communications among these various components can be facilitated by means of a data bus **618.** One or more sets of instructions **624** can be stored completely or partially in one or more of the main memory **604,** static memory **606,** and drive unit **608.** The instructions can also reside within processor **602** during execution thereof by the computer system. The input/output devices **610** can include a keyboard, a multi-touch surface (e.g. a touchscreen) and so on. The interface device(s) **614** can be comprised of hardware components and software or firmware to facilitate an interface to external circuitry. For example, in some scenarios, the interface devices **614** can include one or more analog-to-digital (A/D) converters, digital-to-analog (D/A) converters, input voltage buffers, output voltage buffers, voltage drivers and/or comparators. These components are wired to allow the computer system to interpret signal inputs received from external circuitry and generate the necessary control signals for certain operations described herein.

Drive unit **608** can comprise a machine readable medium **620** on which is stored one or more sets of instructions **624** (e.g. software) which are used to facilitate one or more of the methodologies and functions described herein. The term "machine-readable medium" shall be understood to include any tangible medium that is capable of storing instructions or data structures which facilitate any one or more of the methodologies of the present disclosure. Exemplary machine-readable media can include solid-state memories, electrically erasable programmable read-only memory (EEPROM) and flash memory devices. A tangible medium as described herein is one that is non-transitory insofar as it does not involve a propagating signal.

Computer system **600** should be understood to be one possible example of a computer system which can be used in connection with the various implementations disclosed herein. However, the systems and methods disclosed herein are not limited in this regard and any other suitable computer system architecture can also be used without limitation. Dedicated hardware implementations including, but not limited to, application-specific integrated circuits, programmable logic arrays, and other hardware devices can likewise be constructed to implement the methods described herein. Applications that can include the apparatus and systems broadly include a variety of electronic and computer systems. Thus, the exemplary system is applicable to software, firmware, and hardware implementations.

Further, it should be understood that embodiments can take the form of a computer program product on a tangible computer-usable storage medium. The computer-usable storage medium can have computer-usable program code embodied in the medium. The term computer program product, as used herein, refers to a device comprised of all the features enabling the implementation of the methods described herein. Computer program, software application, computer software routine, and/or other variants of these terms, in the present context, mean any expression, in any language, code, or notation, of a set of instructions intended to cause a system having an information processing capability to perform a particular function either directly or after either or both of the following: a) conversion to another language, code, or notation; or b) reproduction in a different material form.

In view of the forgoing discussion, the present solution concerns implementing systems and methods for generating and/or communicating an encrypted short message. The implementing systems can comprise a communication system and/or a cryptographic system.

The communication system comprises an encrypter configured to: set an initialization vector for a cryptographic algorithm to a time of day used by a transmission security algorithm or to a value computed based on the transmission security algorithm and the time of day; initialize the cryptographic algorithm to run in a cipher mode; and encrypt a short message using the initialization vector as an input to the cryptographic algorithm. Crypto synchronization is provided without communication of the initialization vector to a decryption algorithm. The cipher mode can include, but is not limited to, a counter mode or an authentication encryption mode. The short message can comprise, but is not limited to, a text message and/or a binary message. Extension bits may be added to the short message prior to generation of the encrypted short message.

The communication system may also comprise a transmitter configured to: perform an error detecting algorithm to generate an error-detecting code; append the error-detecting code to the encrypted short message; use the time of day as an input to the transmission security algorithm to generate a scrambled waveform containing the encrypted short message; and/or wirelessly transmit the scrambled waveform without the initialization vector over a communication channel.

The communication system may further comprise a receiver configured to: receive the scrambled waveform; detect the transmission security algorithm used to generate the scrambled waveform; and obtain the initialization vector for a decryption algorithm based on the detected transmission security algorithm.

The communication system also comprises a decrypter configured to: initialize the decryption algorithm to run in a cipher mode; and generate a decrypted short message by decrypting the encrypted short message using the initialization vector as an input to the decryption algorithm.

The cryptographic system comprises: one or more processors; and a non-transitory computer readable medium comprising one or more programming instructions that when executed by the one or more processors, cause the one or more processors to: set an initialization vector for an encryption algorithm to a time of day or to a value computed based on a transmission security algorithm and the time of day; initialize the encryption algorithm to run in a cipher mode; and generate an encrypted short message by encrypting a short message using the initialization vector as an input to the encryption algorithm. Crypto synchronization is provided without communication of the initialization vector to a decryption algorithm. The time of day is used by the transmission security algorithm to generate a scrambled waveform containing the encrypted short message and being absent of the initialization vector.

The processor(s) may be further caused to: add extension bits to the short message prior to generating the encrypted short message; obtain the initialization vector based on a detection of the transmission security algorithm which was used to transmit a waveform containing the encrypted short message; initialize a decryption algorithm to run in a stream or block cipher mode; and/or generate a decrypted short message by decrypting the encrypted short message using the initialization vector as an input to the decryption algorithm.

The described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

## Claims

1. A method for generating an encrypted short message, comprising:
setting, by a circuit, an initialization vector for an encryption algorithm to a time of day or to a value computed based on a transmission security algorithm and the time of day;
initializing, by the circuit, the encryption algorithm to run in a cipher mode; and
generating, by the circuit, the encrypted short message by encrypting a short message using the initialization vector as an input to the encryption algorithm;
wherein crypto synchronization is provided without communication of the initialization vector to a decryption algorithm.

2. The method according to claim 1, further comprising:
using the time of day by the circuit implementing a transmission security algorithm to generate a scrambled waveform containing the encrypted short message; and
wirelessly transmitting the scrambled waveform without the initialization vector from a transmitter over a communication channel.

3. The method according to claim 2, further comprising:
performing an error detecting algorithm to generate an error-detecting code; and
appending the error-detecting code to the encrypted short message prior to generation of the scrambled waveform.

4. The method according to claim 1, wherein the short message comprises a text message or a binary message.

5. The method according to claim 1, further comprising adding extension bits to a short message prior to generating the encrypted short message.

6. The method according to claim 1, wherein the cipher mode comprises a counter mode or an authentication encryption mode.

7. The method according to claim 2, further comprising:
receiving the scrambled waveform at a receiver;
detecting, by the receiver, the transmission security algorithm used to generate the scrambled waveform;
obtaining, by the receiver, the initialization vector for a decryption algorithm based on the detected transmission security algorithm;
initializing, by the receiver, the decryption algorithm to run in the cipher mode; and
generating a decrypted short message by decrypting the encrypted short message using the initialization vector as an input to the decryption algorithm.

8. The method according to claim 1, wherein said generating the encrypted short message further comprises using an encryption key as an input to the encryption algorithm.

9. A communication system, comprising:
an encrypter configured to:
set an initialization vector for a cryptographic algorithm to a time of day input into a transmission security algorithm or to a value computed based on the transmission security algorithm and the time of day;
initialize the cryptographic algorithm to run in a cipher mode; and
encrypt a short message using the initialization vector as an input to the cryptographic algorithm;
wherein crypto synchronization is provided without communication of the initialization vector to a decryption algorithm.

10. The communication system according to claim 9, further comprising a transmitter configured to:
use the time of day as an input to the transmission security algorithm for use by an implementing circuit to generate a scrambled waveform containing the encrypted short message; and
wirelessly transmit the scrambled waveform without the initialization vector over a communication channel.

11. The communication system according to claim 9, wherein the transmitter is further configured to:
perform an error detecting algorithm to generate an error-detecting code; and
append the error-detecting code to the encrypted short message prior to generation of the scrambled waveform; and/or
wherein the short message comprises a text message or a binary message;and/or
wherein extension bits are added to the short message prior to generation the encrypted short message; and/or
wherein the cipher mode comprises a counter mode or an authentication encryption mode.

12. The communication system according to claim 10, further comprising a receiver configured to:
receive the scrambled waveform;
detect the transmission security algorithm used to generate the scrambled waveform; and
obtain the initialization vector for a decryption algorithm based on the detected transmission security algorithm.

13. The communication system according to claim 12, further comprising a decrypter configured to:
initialize the decryption algorithm to run in the cipher mode; and
generate a decrypted short message by decrypting the encrypted short message using the initialization vector as an input to the decryption algorithm.

14. A cryptographic system, comprising:
one or more processors; and
a non-transitory computer readable medium comprising one or more programming instructions that when executed by the one or more processors, cause the one or more processors to:
set an initialization vector for an encryption algorithm to a time of day or to a value computed based on a transmission security algorithm and the time of day;
initialize the encryption algorithm to run in a cipher mode; and
generate an encrypted short message by encrypting a short message using the initialization vector as an input to the encryption algorithm;
wherein crypto synchronization is provided without communication of the initialization vector to a decryption algorithm.

15. The cryptographic system according to claim 14, wherein the time of day is used by the processor implementing the transmission security algorithm to generate a scrambled waveform containing the encrypted short message and being absent of the initialization vector; and/or
wherein the one or more processors are further caused to add extension bits to the short message prior to generating the encrypted short message; and/or
wherein the cipher mode comprises a counter mode or an authentication encryption mode; and/or
wherein the one or more processors are further configured to:
obtain the initialization vector based on a detection of the transmission security algorithm which was used to transmit a waveform containing the encrypted short message;
initialize a decryption algorithm to run in the cipher mode; and
generate a decrypted short message by decrypting the encrypted short message using the initialization vector as an input to the decryption algorithm.
